Europäisches Patentamt

European Patent Office

Office européen des brevets

(19)

(11) Veröffentlichungsnummer: **0 151 211**

A2

## (12) EUROPÄISCHE PATENTANMELDUNG

(21) Anmeldenummer: **84107769.6**

(22) Anmeldetag: **04.07.84**

(51) Int. Cl.⁴: **A 23 G 1/20**
**A 23 G 1/22**

(30) Priorität: **09.02.84 IT 1953284**

(43) Veröffentlichungstag der Anmeldung:
**14.08.85 Patentblatt 85/33**

(84) Benannte Vertragsstaaten:
**AT BE CH DE FR GB LI LU NL SE**

(71) Anmelder: **CARLE & MONTANARI S.p.A.**
**Via Neera 39**
**I-20141 Milano(IT)**

(72) Erfinder: **Cerboni, Renzo**
**Via Raffaello Sanzio, 30**
**Milano(IT)**

(74) Vertreter: **de Dominicis, Riccardo et al,**
**de Dominicis & Partners S.a.s. Via Brera, 6**
**I-20121 Milano(IT)**

(54) **Giessverfahren zum Giessen von Schokolade, Cremen u. dgl., Giessmaschine und Giessplatte zur Durchfuehrung des Giessverfahrens.**

(57) Eine Giessmaschine zum Giessen von Schokolade, Cremen u. dgl. mit einer Giess- und Verteilplatte (3), in der ein Ablassammelkanal (7) erhalten ist, in den ueber Verbindungsnuten (8) Sackbohrungen (6) einmuenden, welche mit den darueberstehenden Austragbohrungen der Giessmaschine (1) uebereinstimmen. Der Ablassammelkanal (7) ist mit einem Kreislauf (10) zur Rueckgewinnung der im Ueberschuss ausgetragenen Schokolade verbunden, wobei der Kreislauf (10) beliebig zu einer Zwischenspeicherung oder zum Speisetrichter (2) der Giessmaschine (1) fuehrt. Unabhaengig von den jeweils benutzten Giessformen werden beim erzielbaren Giessverfahren immer alle die Drehkolben bzw. hinund hergehenden Kolben der Giessmaschine mit Schokolade gespeist. Beim Uebergehen von einem Giessformtyp zu einem anderen Giessformtyp wird lediglich die Giess- und Verteilplatte (3) ersetzt ohne jegliches Eingreifen in den Giessmaschinenkolben.

Fig. 3

Carle & Montanari S.p.A.

Via Neera, 39

20141 Mailand / Italien

Giessverfahren zum Giessen von Schokolade, Cremen u. dgl., Giessmaschine und Giessplatte zur Durchfuehrung des Giessverfahrens.

Vorliegende Erfindung bezieht sich auf ein Giessverfahren zum Giessen von Schokolade, Cremen u. dgl. sowie auf eine Giessmaschine und auf eine Giessplatte zur Durchfuehrung des genannten Giessverfahrens.

Zum Giessen von Schokolade, Cremen, Fondant u. dgl. in den beiden im allgemeinen eingesetzten Arbeitsweisen, d.h. bei dem punktartigen Giessverfahren und bei dem zungenartigen Giessverfahren koennen bekannterweise Giessmaschinen zweier Bauweisen verwendet werden, und zwar einerseits Giessmaschinen mit hin- und hergehenden Kolben und andererseits die neueren Giessmaschinen mit Drehkolben.

Unabhaengig von der Bauweise weist jedoch jede Giessmaschine eine Anzahl von Austragbohrungen fuer die Schokolade, die der Anzahl der vorgesehenen hin- und hergehenden Kolben bzw.

2

Drehkolben gleich ist. Um die gleiche Giessmaschine fuer eine Anzahl von voneinander verschiedenen Giessformen, d.h. eine verschiedene Anzahl von Formausnehmungen bzw. die gleiche Anzahl von untereinander eine verschiedene Gestaltung aufweisende Formausnehmungen besitzenden Giessformen einsetzen zu koennen, d.h. um mit den verschiedenen Giessformen verschiedene Schokoladenprodukte herstellen zu koennen, ist es bekannt, der unteren Austragseite der Giessmaschine Giess- und Verteilplatten zuzuordnen, deren Eingangsbohrungen anzahl- und ordnungsmaessig mit den Austragsbohrungen der Giessmaschine uebereinstimmen. Es ist ferner bekannt, die genannten Eingangsbohrungen der Giessplatten in einer Verzweigungsausfuehrung vorzusehen, so dass auf diese Weise eine groessere Anzahl von Giessformausnehmungen in bezug auf die Austragbohrungen der Giessmaschine ausgefuellt werden kann bzw. die Schokolade in die Giessformausnehmungen insbesondere bei Giessformausnehmungen groesserer Oberflaeche wie bei Schokoladentafeln u. dgl. regelmaessiger verteilt wird. Die Giessmaschinenkolben, die mit den Giessmaschinenaustragbohrungen in Verbindung stehen, die im jeweils in Betracht gezogenen Fall keine Schokolade auszutragen haben, muessen jedenfalls angehalten werden bzw. muessen dieselben waehrend der Betriebsweise der Giessmaschine keine Schokolade austragen.

Beim Variieren der Anzahl der jeweils verwendeten Austragbohrungen der Giessmaschine muss man deshalb bei den bekannten sowohl hin- und hergehende Kolben als auch mit Drehkolben versehenen Giessmaschinen in zwei Hinsichten eingreifen, und zwar:

1. man muss die den nicht verwendeten Austragbohrungen der Giessmaschine zugeordneten Giessmaschinenkolben von der Betriebsweise ausschalten, und

2. man muss der Giessmaschine, die je nach der verwendeten Giessform erforderliche Giessplatte zuordnen.

Waehrend das Auswechseln der Giessplatte sowohl bei den mit hin- und hergehenden Kolben versehenen Giessmaschinen als auch bei Drehkolben aufweisenden Giessmaschinen im wesentlichen auf die gleiche Weise erfolgt, erfolgt das Ausschalten bzw. Anhalten der Kolben bei beiden Giessmaschinentypen auf verschiedene Weisen. Bei hin- und hergehende Kolben aufweisenden Giessmaschinen, bei denen die Kolben mit in der Giessmaschine eingebauten drehbaren Sperrventilen in Verbindung stehen, ist es erforderlich, die jeweils ueberfluessigen bzw. nicht einzusetzenden Kolben durch Zwischenschaltung von die Bewegung der einzusetzenden Kolben erlaubenden kammartigen bzw. leistenartigen Steuerelementen anzuhalten. Bei den mit Drehkolben versehenen Giessmaschinen werden dagegen die auszuschaltenden Kolben durch entsprechende Oeffnungen bestimmt, die in den in den Rotor der Giessmaschine einzufuehrenden und als kontinuierlicher Drehkolben wirkende Laengsleisten ausgearbeitet sind.

Obwohl grundsaetzlich verschieden, weisen die Giessverfahren der mit hin- und hergehenden Kolben versehenen Giessmaschinen und der Drehkolben aufweisenden Giessmaschinen das gemeinsame Merkmal auf, eine kontinuierliche Zufuehrung der fluessigen Schokolade zu allen Kolbenkammern der Giessmaschine vorzusehen und eine Austragung der genannten fluessigen Schokolade lediglich fuer diejenigen Kolbenkammern zu ermoeglichen, die die jeweils je nach der eingesetzten Giessform benutzten bzw. wirksamen Kolben aufnehmen.

Die mit den bekannten Giessverfahren bzw. mit den Giessmaschinen selbst verbundenen Nachteile sind in den Fachkreisen wohlbekannt, wobei in den letzteren eifrig nach Loesungen bzw. Teilloesungen gesucht wird, um bei moeglichst genauen Dosierungen zu groesseren Leistungen wie im allgemeinen gewuenscht, zu kommen.

4

Im Rahmen der Leistungen der Giessmaschinen fuer Schokolade spielt tatsaechlich die Dosierung eine entscheidende Rolle, weil einerseits die diesbezueglichen gesetzlichen Bestimmungen in den verschiedenen Laendern aeusserst streng sind und andererseits ist die taegliche Leistung in Kg der genannten Giessmaschinen fuer Schokolade aeusserst hoch, und dadurch ist es offensichtlich, dass auch an sich kleine Werte in der Groessenordnung von Grammen bzw. Grammteilen, die im Ueberschuss zu dem auf der Verpackung angegebenen Gewicht aus Toleranzgruenden gewaehrt werden, am Ende eines Arbeitstags zu erheblichen Mengen von in der Praxis verlorenem bzw. von den Kaeufern nicht bezahltem Produkt fuehren.

In der Folge werden nun die Nachteile und Unzulaenglichkeiten der mit hin- und hergehenden Kolben versehenen Giessmaschinen in bezug sowohl auf das Giessverfahren als auch auf das Auswechseln von einem Giessformtyp zu einem anderen Giessformtyp kurz erlaeutert:

- Aufgrund der tatsaechlichen Einsetzungszeit der Giessmaschinenkolben untereinander, entstehen bei denselben verschiedene Verschleisswerte.

- Dies bringt mit sich seinerseits nicht einwandfreie volumetrische Wirkungsgrade bei den verschiedenen Kolben/Zylindereinheiten, weil der volumetrische Wirkungsgrad neben der Schokoladenviskositaet ebenfalls von der tadellosen Dichtigkeit der Dichtungen sowie von den entstehenden Spielen abhaengt.

- Erreichen solche Spiele bzw. Verschleisse empfindliche Werte, so kann man zur Bildung von Lufteinschluessen in der in die Kolben/Zylindereinheiten angesaugten Schokolade kommen und dadurch zur befuerchteten Bildung von Luftblasen im Schokoladenendprodukt.

- Die Ausschaltung der jeweils anzuhaltenden Giessmaschinenkolben bedingt die Wahl bzw. das Suchen unter den vorgesehenen kammartigen Steuerelementen der Giessmaschine des fuer den jeweiligen Fall anzuwendenden kammartigen Steuerelementes und die Einfuehrung desselben in die Giessmaschine. Wird ein falsches kammartiges Steuerelement eingefuehrt, was an sich wegen einer vom Bedienungsmann zutreffenden Entscheidung von vornherein nicht mit Sicherheit auszuschliessen ist, so kommt man zu erheblichen Maschinenschaeden, z. B. zum Abbrechen der Sicherheitszapfen oder, falls die letzteren nicht gleich abbrechen, zum Bruch der Giessplatte selbst sowie zu einem erheblichen Verlust sowohl von teurem Produkt, d.h. von Schokolade als auch von Zeit bzw. von nicht erfolgter Produktion. Die Handhabung selbst von solchen kammartigen Steuerelementen kann sehr schwierig werden, insbesondere bei den groesseren Giessmaschinen, die eine Anzahl von verschiedenen Hunderten von Zylinder/Kolbeneinheiten aufweisen koennen und deshalb die kammartigen Steuerelemente sehr betraechtliche Abmessungen und Gewichte besitzen.

Meistens erfolgt der Fehler, der darin besteht, einen oder mehrere Kolben nicht auszuschalten. In diesem Falle ist der auf den Anschlag der ausgetragenen Schokolade seitens des nicht ausgeschlossenen Kolbens auf eine flache Oberflaeche der Giessplatte zurueckzufuehrende Gegendruck nicht ausreichend, um das Brechen des diesbezueglichen vorgesehenen Sicherheitszapfens hervorzurufen, jedoch ist der genannte Gegendruck in der Lage, eine oertliche Durchbiegung der durch die in ihr ausgearbeiteten Bohrungen und Kanaele an sich schon geschwaechte Giessplatte zu verursachen. Daraus entsteht ein Spiel zwischen der unteren Seite der Giessmaschine und der oberen Oberflaeche der Giessplatte, wobei in dieses Spiel die von den angrenzenden Austragbohrungen der Giessmaschine bzw. von den angrenzenden Giessformausnehmungen ankommenden Schokolade gelangt, die dadurch die Schokolade in den genannten angrenzenden Giessformausnehmungen mittels eines Schokoladenfilms miteinander verbindet. Dies fuehrt zu schwereren Produkten und ist deshalb mit einem oekonomischen Verlust fuer den Hersteller verbunden und wirkt sich ferner ebenfalls negativ auf die nachtraeglichen Bearbeitungsphasen, wie z.B. auf die Entnahme der Produkte aus den Giessformen, auf die Verpackungsphase usw., aus.

Innerhalb der Giessmaschine entstehen Unterschiede in der Schokoladenviskositaet bzw. -fliessfaehigkeit, die auf die verschiedenen Temperaturen der Kolben/Zylindereinheiten zurueckzufuehren sind. Waehrend der Ansaugphase der Schokolade gelangt die fluessige Schokolade durch Schwerkraft in die verschiedenen Kanaele der Kolben und der drehbaren Verteilventile und verbleibt dort fuer die ganze Zeit, in der die gleichen Giessformen verwendet werden. Beim Ersetzen der Giessformen wird die dort verbleibende Schokolade zuerst entfernt und beseitigt, was ein Eingreifen des Bedienungsmannes und einen Zeitverlust mit sich bringt.

- Druckunregelmaessigkeiten innerhalb der Giessmaschine und indirekterweise moegliche Dosierungsunregelmaessigkeiten.

- Erhebliche Gesamtzeiten fuer die Durchfuehrung der verschiedenen manuellen Eingreifphasen beim Uebergehen von einem Giessformtyp zum anderen.

Bei den Giessmaschinen mit Drehkolben sind dagegen die nachfolgenden Unzulaenglichkeiten feststellbar:

- Erforderliche Zeit fuer die Ersetzung der die Drehkolben bildende Laengsleiste mit der jeweils einzusetzenden Laengsleiste.

- Anwesenheit einer unwirksamen Schokoladenmasse innerhalb der ausgeschlossenen kontinuierlichen Kammern und indirekterweise

unterschiedliche Druckwerte in den Austragkammern und in den ausgeschlossenen Kammern, wodurch ein Schokoladendurchtritt von den wirksamen Kammern zu den unwirksamen Kammern moeglich ist und wobei dies zu unregelmaessigen Dosierungen fuehrt.

- Infolge des Verbleibens der fluessigen Schokolade in den ausgeschlossenen Kammern koennen Viskositaetsunregelmaessigkeiten der Schokolade entstehen, die sich in die gemeinsame Mischkammer und von dieser in die Dosierkammern verpflanzen.

Was das Auswechseln der Giess- und Verteilplatten anbelangt, erfolgt dieser Vorgang auf die gleiche Weise fuer beide Giessmaschinentypen.

Der vorliegenden Erfindung liegt die Aufgabe zugrunde, ein Giessverfahren fuer sowohl mit hin- und hergehenden Kolben versehenen Giessmaschinen als auch fuer Drehkolben aufweisende Giessmaschinen, sowie eine Giessmaschine und eine Giessplatte vorzuschlagen, die es ermoeglichen:

a) gleichmaessigere Behandlungs- und Giessumstaende innerhalb der Giessmaschine zu erzielen, und dies unabhaengig von den jeweils ausgeschalteten bzw. angehaltenen Kolben,

b) die Anpassungszeiten und -vorgaenge fuer die Giessmaschine beim Uebergehen von einem Giessformtyp zu einem anderen Giessformtyp deshalb drastisch herabzusetzen, weil lediglich die Giessplatte ersetzt werden muss, ohne weitere Eingreifvorgaenge auf die Kolben zu taetigen, und

c) jeglicher moeglicher menschlicher Fehler bei der Ausruestung der Giessmaschine seitens des Bedienungsmannes von vornherein auszuschliessen.

Die der vorliegenden Erfindung zugrunde gelegte Aufgabe wird erfindungsgemaess mittels eines Giessvorganges in Giessmaschinen fuer Schokolade, Cremen, Fondant u.dgl. geloest, das eine Zufuhrphase fuer die Zufuehrung der fluessigen Schokolade zu den Dosierkammern bzw. -zylindern sowie eine nachfolgende Giessphase aufweist und dadurch gekennzeichnet ist, dass:

A) bei der Zufuhrphase wird die fluessige Schokolade immer allen Dosierkammern bzw. -zylindern gefoerdert,

B) bei der Austragphase wird Schokolade von allen Austragbohrungen der Giessmaschine ausgetragen,

C) gleichzeitig mit der Austragphase der Schokolade wird in die Giessplatte eine kontinuierliche Ablassphase der in bezug auf die erforderliche Schokoladenmenge zur Abfuellung der jeweils verwendeten Giessformen Ueberschussschokolade durchgefuehrt, und

D) eine Rueckgewinnphase der im Ueberschuss ausgetragenen Schokolade durchgefuehrt wird.

Erfindungsgemaess wird die im Ueberschuss ausgetragene Schokolade beliebig entweder zu einem Zwischenspeicher oder kann die Schokolade umgewaelzt und erneut in den Speisetrichter der Giessmaschine gespeist werden.

Die erfindungsgemaesse Giessmaschine ist dadurch gekennzeichnet, dass dieselbe einen Kreislauf zur Rueckgewinnung der der Giessplatte unter Betrachtung der jeweils eingesetzten Giessform im Ueberschuss zugefuehrten Schokolade besitzt, wobei dieser Kreislauf der Giessplatte zugeordnet ist.

Erfindungsgemaess ist die Giessplatte fuer das erfindungsgemaesse Giessverfahren bzw. die erfindungsgemaesse Giessmaschine dadurch gekennzeichnet, dass in der Giessplatte wenigstens ein Ablassammelkanal ausgebildet ist, in den ueber Verbindungsnuten die fuer die jeweils in Betracht gezogene Giessform nicht verwendeten Austragbohrungen der Giessmaschine einmuenden, wobei der Ablassammelkanal wenigstens eine Ablassschraubverbindung zur Verbindung des genannten Ablassammelkanals mit dem Kreislauf zur Rueckgewinnung der im Ueberschuss zugefuehrten Schokolade aufweist.

Erfindungsgemaess kann ferner der Ablassammelkanal als eine auf ihrer Oberseite offene Nut in der Ausgiessplatte ausgefuehrt werden, wobei die Abschlusseite der genannten offenen Nut durch die untere Giessmaschinenseite gebildet wird. Als Alternative kann der Ablassammelkanal ebenfalls unterteilt vorgesehen werden, und zwar teilweise in der oberen und teilweise in der unteren Oberflaeche der Giessplatte, falls dies wegen Foerdermengengruenden zweckmaessig ist. Auf der unteren Giessplattenflaeche wird der Ablassammelkanal zweckmaessigerweise mit einer Gegenplatte verschlossen.

Mit dem erfindungsgemaessen Giessverfahren sowie mit der erfindungsgemaessen Giessmaschine und Giessplatte werden Vorteile sowohl bezueglich des Giessverfahrens, d.h. die Handlungsweise der Schokolade, als auch bezueglich der Wirkungsweise und der Eingreifvorgaenge auf die Giessmaschine beim Uebergehen von einem Giessformentyp zu anderen Giessformentypen. Was das Giessverfahren anbelangt, so wird dasselbe nun in Anwesenheit der besseren Umstaende innerhalb der Giessmaschine bezueglich sowohl der Viskositaetsgleichmaessigkeit als auch der Verteilung der Drucke und Temperaturen, so dass die oben erwaehnten Nachteile bezueglich unregelmaessiger Dosierungen, Schokoladendurchtritte usw. beseitigt werden. Was den Bedienungsmann anbelangt, werden gleichzeitig die Eingreifzeiten desselben drastisch deshalb herabgesetzt, weil der Bedienungsmann nun lediglich das Auswechseln der Giessplatte durchzufuehren hat, ohne jedoch auf die Kolben einzugreifen. Einerseits wird deshalb die tatsaechliche Ersetzung der kammartigen Steuerelemente und der damit moeglichen menschlichen Fehler beseitigt und andererseits werden die Eingriffe auf die Anhaltvorrichtungen der auszuschaltendenKolben ueberfluessig, wobei dies, wie in der Praxis feststellbar, ebenfalls mit menschlichen Fehlern verbunden ist, die zu den oben erwaehnten Nachteilen fuehren.

Ein weiterer Vorteil der vorgeschlagenen Loesung besteht in einer aeusserst einfachen Anpassbarkeit der schon bestehenden Giessmaschinen an die vorgeschlagene Loesung, weil lediglich erforderlich ist, den Kreislauf fuer die Rueckgewinnung der Schokolade dem Giessmaschinenkoerper zuzuordnen. Der Kreislauf kann dann beliebig entweder in einen Zwischenspeisungsbehaelter oder gleichzeitig in den Speisetrichter der Giessmaschine selbst einmuenden. Vorteilhafterweise werden Hilfsvorrichtungen zur Erwaermung und Umwaelzung der im Ueberschuss gefoerderten Schokolade vorgesehen.

Noch ein weiterer Vorteil ist darin zu sehen, dass die erfindungsgemaessen Giessplatten die gleichen Abmessungen der zur Zeit bekannten bzw. eingesetzten Giess- und Verteilplatten aufweisen, d.h. die erfindungsgemaessen Giessplatten keinen groesseren Platzbedarf verlangen und deshalb voellig austauschbar sein koennen.

Weitere Merkmale, Vorteile und Einzelheiten des erfindungsgemaessen Giessverfahrens, sowie der erfindungsgemaessen Giessmaschine und Giessplatte sind ferner der nachfolgenden Beschreibung unter Bezugnahme auf die beigefuegte Zeichnung ersichtlich, in der die vorgeschlagene Erfindung aufgrund einiger vorgezogener Ausfuehrungen dargestellt ist.

Es zeigen:

Fig. 1 eine prinzipielle Ansicht einer hin- und hergehende Kolben aufweisende Giessmaschine bekannter Bauart, die mit einer erfindungsgemaessen Giessplatte und einem erfindungsgemaessen Rueckgewinnungskreislauf versehen ist;

Fig. 2 eine aehnliche prinzipielle Ansicht fuer eine mit Drehkolben versehenen Giessmaschine;

11

Fig. 3 und 4 zwei Draufsichten auf zwei erfindungsgemaesse Giessplatten; und

Fig. 5 und 6 einen Querschnitt entlang der Linie V-V und einen Laengsschnitt entlang der Linie VI-VI in Fig. 3.

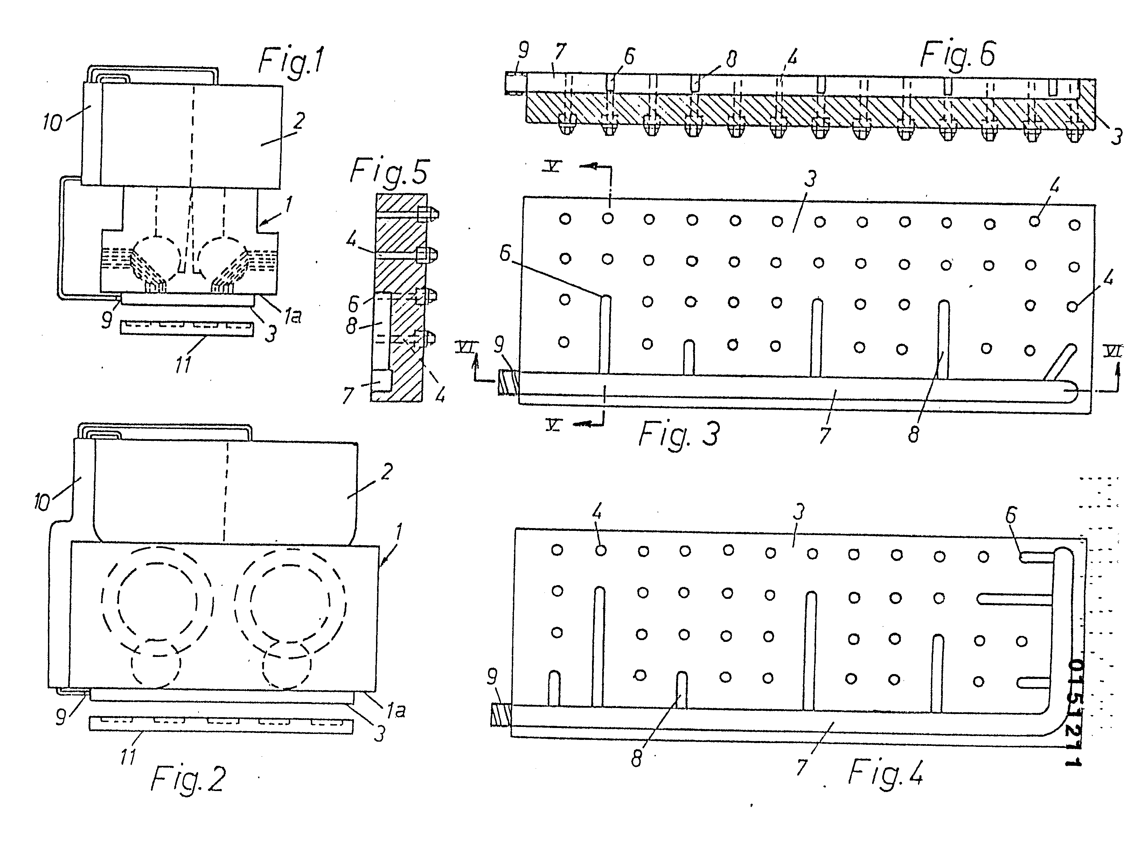

Bei den verschiedenen Figuren, die mit verschiedenen Massstaeben dargestellt sind, weisen gleiche Teile gleiche Bezugszeichen auf. Mit 1 wird in Fig. 1 eine mit hin- und hergehenden Kolben versehene Giessmaschine und in Fig. 2 eine Drehkolben aufweisende Giessmaschine bezeichnet. Dieselben weisen einen oberen Speisetrichter 2 und unten eine Giess- und Verteilplatte 3 gemaess vorliegender Erfindung, d.h. mit einem kontinuierlichen Schokoladenablass auf. Die bis jetzt bekannten Giessplatten weisen wie an sich bekannt eine Anzahl von Giessbohrungen 4 auf, die in der Giessplattenoberflaeche als Anordnung und Anzahl mit der Anordnung und Anzahl der in die Unterseite 1a der Giessmaschine 1 ausmuendenden Austragbohrungen uebereinstimmen und in ihrem entgegengesetzten Ende die Austragduesen 5 aufweisen. Mit 6 sind Sackbohrungen bezeichnet, die den Austragbohrungen der Giessmaschine 1 entsprechen, deren Kolben ausgeschaltet bzw. nicht eingesetzt werden muessen. Erfindungsgemaess muenden nun die genannten Sackbohrungen 6 ueber Verbindungsnuten 8 in einen Ablassammelkanal 7. Sowohl der Ablassammelkanal 7 als auch die Verbindungsnuten 8 sind als oben freie Nuten bzw. Kanaele erhalten bzw. ausgearbeitet, wobei der Ablassammelkanal und die Verbindungsnuten oben durch die erwaehnten unteren Giessmaschinenseite 1a beim Anbauen der Giessplatte 3 an der Giessmaschine 1 geschlossen werden. Mit 9 wird eine Schraubverbindung zur Verbindung des genannten Ablassammelkanals 7 mit dem Kreislauf 10 zur Rueckgewinnung der im Ueberschuss gefoerderten Schokolade bezeichnet, wobei der Kreislauf 10 schematisch der Giessmaschine 1 zogeordnet und in die oberen Speisetrichter derselben einmuendend dargestellt ist.

Im Falle einer Ausschaltung einer hohen Anzahl von Giessmaschinenkolben, die auch ungefaehr ein Drittel der Gesamtzahl der Giessmaschinenkolben betragen koennen, kann der Ablassammelkanal 7 ohne weiteres einen groesseren Querschnitt aufweisen. Um die aeusseren Abmessungen der Giessplatte 3 bzw. den Platzbedarf derselben in bezug auf die bekannten Giessplatten nicht zu erhoehen, kann der Ablassammelkanal entweder lediglich in der oberen Oberflaeche der erfindungsgemaessen Giessplatte, wie dargestellt, oder wird der Ablassammelkanal ebenfalls auf die untere Oeberflaeche der Giessplatte 3 vorgeshen werden. Im letzteren Falle wird der untere Ablassammelkanal durch eine nicht naeher dargestellte Gegenplatte verschlossen.

Mit der erfindungsgemaessen Giessplatte und dem erfindungsgemaessen Rueckgewinnungskreislauf wird deshalb ein Giessverfahren bewirkt, bei dem alle sowohl hin- und hergehenden als auch drehenden Kolben Schokolade heraustragen, und zwar unabhaengig von den angebauten Giessplatten 3 bzw. von den jeweils eingesetzten und in der Zeichnung schematisch mit 11 angedeuteten Giessformen. Gleichzeitig mit der Dosierphase wird deshalb eine kontinuierliche Ablassphase der im Uberschuss zugefuehrten Schokolade durchgefuehrt, wobei die ueberschuessige Schokolade durch den Kreislauf 10 beliebig zu den Speisetrichtern 2 der Giessmaschine 1 oder zu einem nicht naeher dargestellten Zwischenspeisungsbehaelter zugefuehrt wird. Auf diese Weise werden innerhalb der Dosiermaschine immer die optimalen gleichmaessigen Bedingungen bezueglich sowohl der Schokoladenviskositaet als auch der Drucke und Temperaturen herrschen, wodurch auch die Dosierungen immer tadellos erfolgen.

Dem Obengesagten ist entnehmbar, dass mit dem Giessverfahren und der Giessmaschine sowie mit der Giessplatte nach vorliegender Erfindung die der Erfindung zugrunde gelegte Aufgabe wirksam geloest wird und die oben erwaehnten Vorteile erzielt werden.

Insbesondere werden die Ausruestungszeiten beim Uebergehen von einem Giessformentyp zu anderen Giessformentypen drastisch herabgesetzt, werden die vom Bedienungsmann herruehrenden menschlichen Fehler und die damit verbundenen oekonomischen Verluste beseitigt und werden optimale Betriebsweisebedingungen bei jedem eingesetzten Giessformentyp erzielt.

Um die Umwaelzung der Schokolade in dem Ablassammelkanal der Giessplatte zu erleichtern, kann der Boden dieses Ablassammelkanals sowie die in der Unterseite der Giessmaschine erhaltene obere Seite des genannten Ablassammelkanals bogenartig ausgefuehrt werden, um somit etwaige Rueckstaubereiche bei den Eckenbereichen des Ablassammelkanals mit Sicherheit zu vermeiden. Der Verlauf des Ablassammelkanals kann parallel zu einer oder mehreren der Seitenkanten der Giessplatte neben denselben vorgesehen werden. Eine naehere Beschreibung des Zwischenspeisungsbehaelters sowie der Hilfsvorrichtungen zur Erwaermung und Umwaelzung der rueckgewonnenen Schokolade im Kreislauf 10 ist deshalb weggelassen worden, weil diese Teile ohne weiteres von einem Fachmann ohne Schwierigkeiten hergestellten werden koennen und dem Grundgedanken vorliegender Erfindung nicht gehoeren.

Alle Einzelteile koennen geaendert bzw. durch andere technisch und/oder funktionell gleichwertige Teile ersetzt werden, ohne dadurch den Schutzumfang vorliegender Erfindung zu verlassen.

Alle der Beschreibung, den Anspruechen und der Zeichnung entnehmbaren Merkmale sind fuer die vorliegende Erfindung sowohl einzeln als auch in beliebiger Kombination untereinander als erfindungswesentlich zu betrachten.

Carle & Montanari S.p.A.

Via Neera, 39

20141 Mailand / Italien

Patentansprueche

1.Giessverfahren zum Giessen von Schokolade, Cremen u. dgl. in Giessmaschinen, enthaltend eine Zufuehrphase zur Zufuehrung der fluessigen Schokolade zu den Dosierkammern bzw. -zylindern, sowie eine nachtraegliche Giessphase, dadurch gekennzeichnet, dass:

A) bei der Zufuehrphase die fluessige Schokolade immer <u>allen</u> Dosierkammern bzw. -zylindern gefoerdert wird,

B) bei der Austragphase die Schokolade von <u>allen</u> Austragbohrungen der Giessmaschine ausgetragen wird,

C) gleichzeitig mit der Austragphase der Schokolade in die Giessplatte eine kontinuierliche Ablassphase der in bezug auf die erforderliche Schokoladenmenge zur Abfuellung der jeweils verwendeten Giessformen Ueberschussschokolade durchgefuehrt wird, und

D) eine Rueckgewinnphase der im Ueberschuss ausgetragenen Schokolade vorgesehen wird.

2. Giessverfahren nach Anspruch 1, dadurch gekennzeichnet, dass bei der Ruckgewinnungsphase der im Ueberschuss ausgetragenen Schokolade die letztere beliebig zu einem Zwischenspeisungsbehaelter oder zum Speisetrichter der Giessmaschine umgewaelzt wird.

3. Giessmaschine zur Durchfuehrung des Giessverfahrens fuer Schokolade, Cremen u. dgl. nach Anspruch 1 und 2, enthaltend hin- und hergehende Kolben bzw. Drehkolben, dadurch gekennzeichnet, dass dieselbe einen der Giessplatte (3) zugeordneten Rueckgewinnungskreislauf (10) zur Rueckgewinnung der im Ueberschuss zu der genannten Giessplatte (3) zugefuehrten Schokolade je nach den jeweils eingesetzten Giessformen (11) aufweist.

4. Giessplatte zur Durchfuehrung des Giessverfahrens nach Anspruch 1 und 2, dadurch gekennzeichnet, dass in der Giessplatte wenigstens ein Ablassammelkanal (7) ausgearbeitet ist, in den ueber Verbindungsnuten (8) die fuer die jeweils in Betracht gezogenen Giessform (11) nicht verwendeten Austragbohrungen der Giessmaschine (1) einmuenden, wobei der Ablassammelkanal (7) wenigstens eine Ablassschraubverbindung (9) zur Verbindung des genannten Ablassammelkanals (7) mit dem der Giessmaschine (1) zugeordneten bzw. in der letzteren eingebauten Kreislauf (10) zur Rueckgewinnung der im Ueberschuss zugefuehrten Schokolade aufweist.

5. Giessplatte nach Anspruch 4, dadurch gekennzeichnet, dass der Ablassammelkanal (7) parallel zu einer Laengskante der Giessplatte (3) neben derselben verlaeuft.

6. Giessplatte nach Anspruch 4, dadurch gekennzeichnet, dass der Ablassammelkanal (7) parallel zu zwei oder mehreren der Giessplattenkanten in der Naehe derselben verlaeuft.

7. Giessplatte nach Anspruch 4, dadurch gekennzeichnet, dass der Ablassammelkanal (7) ringfoermig entlang des Umfanges der Giessplatte (3) verlaeuft, wobei der Ablassammelkanal (7) zwei oder mehrere voneinander entfernte Schraubverbindungen (9) zur Verbindung der Giessplatte (3) mit dem Kreislauf (10) zur Rueckgewinnung der im Ueberschuss gefoerderten Schokolade aufweist.

8. Giessplatte nach einem oder mehreren der Ansprueche 4 bis 7, dadurch gekennzeichnet, dass der Ablassammelkanal (7) zweiteilig ausgefuehrt wird, und zwar ein Teil desselben wird in der oberen Oberflaeche der Giessplatte (3) und der zweite Teil wird in der unteren Oberflaeche der Giessplatte (3) ausgearbeitet, wobei eine Verschlussplatte den unteren Ablassammelkanalteil abschliesst und wobei die genannten Ablassammelkanalteile dieselben verbindende Verbindungsbohrungen sowie Schraubverbindungen (9) zur Verbindung der Giessplatte mit dem Kreislauf (10) zur Rueckgewinnung der im Ueberschuss gefoerderten Schokolade aufweisen.

9. Giessplatte nach einem oder mehreren der Ansprueche 4 bis 8, dadurch gekennzeichnet, dass die waagerechten Seiten der Ablassammelkanaele (7) bogenfoermig ausgefuehrt sind.

0151211

Fig.1

Fig.2

Fig.3

Fig.4

Fig.5

Fig.6